# EUROPÄISCHE PATENTSCHRIFT

(11) **EP 2 739 387 B1**
(45) Veröffentlichungstag und Bekanntmachung des Hinweises auf die Patenterteilung: **21.02.2024**
(21) Anmeldenummer: 12743437.1
(22) Anmeldetag: 30.07.2012
(51) Int. Cl.: B01J 19/00, C40B 30/08, C40B 60/12, C10G 45/22

(54) **VERFAHREN ZUR BEHANDLUNG VON PRODUKTFLUIDSTRÖMEN**
METHOD FOR HANDLING PRODUCT FLUID FLOWS
PROCÉDÉ DE MANIPULATION DE FLUX DE PRODUIT FLUIDE

(30) Priorität: 04.08.2011 DE 102011109454
(43) Veröffentlichungstag der Anmeldung: 11.06.2014
(73) Patentinhaber: hte GmbH the high throughput experimentation company, 69123 Heidelberg (DE)
(72) Erfinder: FIND, Josef, 68723 Schwetzingen (DE); HAAS, Alfred, 69214 Eppelheim (DE); BRENNER, Armin, 69214 Eppelheim (DE)
(74) Vertreter: BASF IP Association
(86) Internationale Anmeldenummer: PCT/EP2012/064850
(87) Internationale Veröffentlichungsnummer: WO 2013/017556

(56) Entgegenhaltungen:
- WO-A1-02/092220
- WO-A1-2008/055585
- WO-A1-2008/080365

## Beschreibung

Die Erfindung betrifft ein Verfahren zur Behandlung von Produktfluidströmen in einer Anordnung von zwei oder mehr Reaktoren im Labormaßstab, wobei die Produktfluidströme bei der katalytischen Entschwefelung und Entstickung von flüssigen Zuläufen in Gegenwart von Wasserstoff entstehen. Das erfindungsgemäße Verfahren wird auf dem Gebiet der Hochdurchsatzforschung eingesetzt, und zwar bei Laborreaktionsapparaturen, bei denen eine Mehrzahl beziehungsweise eine Vielzahl von Reaktionsräumen parallel angeordnet sind. Das erfindungsgemäße Verfahren zur beschleunigten Entwicklung von Feststoffkatalysatoren beziehungsweise zur beschleunigten Optimierung von Prozessbedingungen eingesetzt wird.

Dabei ist das Aufarbeiten von Rückstandsölen und flüssigen Zuläufen, die einen hohen Verunreinigungsgrad an schwefel- und stickstoffhaltigen Verbindungen aufweisen - auch aufgrund der Verknappung und Kostensteigerung bei Rohstoffen - von großem wirtschaftlichem und technischem Interesse. Aus diesem Grunde ist es notwendig, auf der Basis von Forschung und Entwicklung neue Verfahren und verbesserte Katalysatoren bereitzustellen, die die Rückstandsöle und Zuläufe mit hohem Verunreinigungsgrad besser nutzbar machen. Insbesondere im Laborbereich ist der Einsatz von katalytischen Versuchsapparaturen für das Prozessieren von Rückstandsölen und Zuläufen mit hohem Verunreinigungsgrad jedoch stark eingeschränkt, so dass oftmals keine Langzeituntersuchungen durchgeführt werden können.

Die experimentellen Messdaten, die gemäß dem Stand der Technik bei katalytischen Untersuchungen im Langzeitbetrieb mittels Laborkatalyseapparaturen erzielt werden, sind - insbesondere bei Umsetzung von schweren Rückstandsölen - nur von geringer Aussagekraft. Aus diesem Grund ist es bisher in der Regel erforderlich, umfangreiche und kostspielige Vergleichsuntersuchungen in größeren katalytischen Testapparaturen - wie beispielsweise Pilotanlagen - durchzuführen, da es hierbei leichter ist, experimentelle Bedingungen nachzustellen, die möglichst den Bedingungen in großtechnischen Anlagen in Raffinerien gleichen.

Eine der Aufgaben, die der Erfindung zugrunde liegt, ist es, die Langzeitstabilität beim Betrieb von Laborkatalyseapparaturen, also Reaktoren im "Labormaßstab", zu verbessern. Eine weitere Aufgabe ist es, technische Möglichkeiten zu entwickeln, um diejenigen Produktfluidströme in Laborkatalyseapparaturen zu behandeln, die bei der Verarbeitung von flüssigen Zuläufen mit einem hohen Verunreinigungsgrad anfallen. Die Verunreinigungen sind dabei schwefel- und stickstoffhaltige Verbindungen.

Die hier genannten Aufgaben und weitere hier nicht genannten Aufgaben werden durch ein Verfahren gemäß Anspruch 1 zur kontinuierlichen Behandlung von Produktströmen gelöst. Dabei handelt es sich um Verfahren zur Behandlung von Produktfluidströmen in einer Anordnung von zwei oder mehr Reaktoren, insbesondere in Reaktoren im Labormaßstab (Laborkatalyseapparatur) mit zwei oder mehr parallel angeordneten Reaktionsräumen, wobei
(a) den einzelnen Reaktionsräumen je ein Eduktfluidstrom, umfassend einen flüssigen Zulauf ausgewählt aus der Klasse von schweren Rückstandsölen und Wasserstoff oder ein anderes Reaktionsgas und Trägergas, zugeführt wird, wobei das schwere Rückstandsöl sowohl schwefelhaltige Verbindungen als auch stickstoffhaltige Verbindungen aufweist wobei, der Schwefelgehalt im Bereich von 0,5 bis 7 Gew.-% und ein Stickstoffgehalt im Bereich von 0,1 bis 5 Gew.-% bezogen auf den gesamten flüssigen Zulauf ausmachen, wobei die Menge an zugeführtem Eduktfluid eine LHSV im Bereich von 0,05 bis 10 h⁻¹ aufweist und jeder einzelne Reaktionsraum ein Innenvolumen im Bereich von 1 bis 50 ml aufweist, und
(b) die aus den einzelnen Reaktionsräumen austretenden Produktgasströme in je einen separaten Abscheider überführt werden, und
wobei das Verfahren dadurch gekennzeichnet ist, dass den einzelnen reaktionsraumausgangsseitigen Bereichen, und zwar zwischen den Abscheidern und den ausgangsseitigen Drosseln, zumindest ein Inertgas zugeführt wird, und dass das Verhältnis des Volumenstroms des Inertgases (V_{IG}) zum Volumenstrom des Produktfluidstroms (V_{PFS}) V_{IG}/V_{PFS} ≥ 10 ist.

Bevorzugt handelt es sich bei einem "Behandeln" im Sinne der vorliegenden Erfindung um ein Inkontaktbringen eines Produktfluidstromes mit zumindest einem Gas beziehungsweise einer Gasmischung.

Die einzelnen Reaktionsräume der Katalyseapparatur weisen ein Innenvolumen in einem Bereich von 1 ml bis 50 ml auf.

Vorzugsweise ist der Anteil an gasförmigem Stickstoff im Inertgas gleich oder größer 95 %.

Das Trägergas, das dem Eduktfluid zugesetzt wird beziehungsweise das Bestandteil des Eduktfluids ist, ist oder enthält in einer bevorzugten Ausführungsform gasförmiger Stickstoff, Sowohl das Trägergas als auch das Inertgas können Spurengase aufweisen, die als interner Standard zur Kalibrierung von Flüssen und Gasströmen eingesetzt werden. Als Spurengas kann beispielsweise Argon eingesetzt werden.

Das erfindungsgemäße Verfahren betrifft flüssige Zuläufe, die sowohl schwefelhaltige Verbindungen als auch stickstoffhaltige Verbindungen aufweisen, wobei der Schwefelgehalt im Bereich von 0,5 bis 7 Gew.-% und der Stickstoffgehalt im Bereich von 0,5 bis 5 Gew.-%, jeweils bezogen auf das Gesamtgewicht des Zulaufs.

Die Menge an flüssigem Zulauf, die in den jeweiligen Reaktionsraum gefördert wird, kann beispielhaft anhand von der LHSV ("Liquid Hourly Space Velocity") angegeben werden. Die LHSV liegt vorzugsweise in einem Bereich von 0,05 bis 10 h⁻¹, weiter vorzugsweise in einem Bereich von 0,5 bis 3 h⁻¹.

Bezüglich der Versuchsdauer ist es bevorzugt, dass das erfindungsgemäße Verfahren insbesondere in Langzeituntersuchungen eingesetzt wird, wobei das erfindungsgemäße Verfahren insbesondere in diesem Zusammenhang von großem Vorteil ist. Der Begriff der Langzeituntersuchungen bezieht sich im Sinne der vorliegenden Erfindung auf vorzugsweise kontinuierliche Experimente, bei denen die Zeitdauer ein Tag und länger ist, vorzugsweise ist die Zeitdauer der Experimente 10 Tage und länger, weiter vorzugsweise ist die Zeitdauer der Experimente 20 Tage und länger, noch weiter bevorzugt ist die Zeitdauer 30 Tage und länger. Im Sinne der vorliegenden Erfindung sind auch Langzeituntersuchungen über eine Zeitdauer von 100 Tagen und mehr.

Der technische Aufbau einer Laborkatalyseapparatur in ihren grundlegenden Komponenten, die für das erfindungsgemäße Verfahren verwendet werden kann, ist aus dem Stand der Technik prinzipiell bekannt und wird beispielsweise in den Patentanmeldungen WO 2005/063372 A2, WO 2008/055585 A1 und WO 2008/012073 A1 offenbart. Derartige Katalyseapparaturen sind dadurch gekennzeichnet, dass sie Bauelemente mit geringen Abmessungen enthalten. Zu diesen Bauelementen gehören u.a. Verbindungsleitungen, Drosselleitungen und Verschlusselemente von Ventilen, wobei die Bauelemente in direktem Kontakt mit den Stoffströmen stehen, die in der Apparatur weiterverarbeitet werden.

Auch WO2008/0800365 beschreibt ein Verfahren zur Behandlung von Produktfluidströmen in einer Anordnung von zwei oder mehr Reaktoren in einer Laborkatalyseapparatur.

Zur Durchführung des erfindungsgemäßen Verfahrens ist es besonders bevorzugt, dass die Apparatur Zufuhrleitungen für Inertgas im Bereich zwischen den Ausgängen der Reaktionsräume und den Abscheidern aufweist. In dieser bevorzugten Ausführungsform wird verhindert, dass sich unmittelbar am Reaktorausgang schon NH₄Sₓ bildet, falls sich NH₃ und H₂S in der Gasphase am Reaktoreingang befinden.

In Bezug auf die Dimensionierung der hier aufgeführten Bauelemente ist es bevorzugt, dass die Verbindungsleitungen der im erfindungsgemäßen Verfahren verwendeten Apparatur einen Innendurchmesser im Bereich von 1 mm bis 10 mm aufweisen, wobei ein Innendurchmesser im Bereich von 1 mm bis 5 mm bevorzugt ist. Die Drosselleitungen weisen bevorzugt einen Innendurchmesser im Bereich von 50 µm bis 1000 µm auf, vorzugsweise liegt der Innendurchmesser in einem Bereich von 75 µm bis 500 µm und weiter bevorzugt in einem Bereich von 100 µm bis 250 µm.

Die jeweiligen Versuchsbedingungen hängen auch von den Eigenschaften des flüssigen Zulaufs ab, wobei für die Verarbeitung und Handhabung eines Schweröls generell anspruchsvollere Versuchsbedingungen erforderlich sind als für die Verarbeitung von Benzin oder leichtem Heizöl.

Überraschend wurde nun herausgefunden, dass die Handhabung von Produktfluidströmen insbesondere dann besonderes vorteilhaft möglich ist, wenn diese gemäß des erfindungsgemäßen Verfahrens erfolgt. Hierbei ist es möglich, dass die Bildung von Ablagerungen auf den Oberflächen der Bauelemente weitgehend unterdrückt beziehungsweise auch vollständig unterbunden werden kann.

Es ist hervorzuheben, dass es durch das erfindungsgemäße Verfahren möglich ist, insbesondere schwerflüchtige Zuläufe mit einem hohen Verunreinigungsgrad an schwefel- und stickstoffhaltigen Verbindungen einem zuverlässigen und robusten Laboruntersuchungsprozess zugänglich zu machen. Durch das Verfahren können Reaktionsbedingungen, die in großtechnischen Anlagen durchgeführt werden, realitätsnah und über lange Zeiträume auch im Labormaßstab nachgestellt werden.

Die Entfernung der Verunreinigungen bezieht sich bevorzugt auf die katalytische Hydrierung von schwefelhaltigen und stickstoffhaltigen Verbindungen, die mittels katalytischer Reaktionen in möglichst vollständiger Weise zu Schwefelwasserstoff und zu Ammoniak umgewandelt werden sollen. Aufgrund der chemischen und physikalischen Prozessbedingungen ist eine vollständige Umwandlung jedoch meistens nicht möglich. Darüber hinaus zerfallen auch die gebildeten Komponenten oder reagieren weiter, wobei sich u.a. auch ammoniumsulfidhaltige Verbindungen NH₄Sₓ bilden können. Eine große Rolle bei der Bildung von Ablagerungen spielt die Tatsache, dass in den Reaktionsräumen eine höhere Temperatur herrscht als in den reaktionsraumausgangsseitigen Bereichen. Die Bildung solcher Ablagerungen basiert auf komplexen Reaktionen und die Zusammensetzung solcher Ablagerungen hängt vom jeweiligen Reaktionssystem ab. Es ist davon auszugehen, dass sich zumindest für die oben genannten Reaktionen unterschiedliche Poly-Sulfide beziehungsweise Ammoniumsulfide bilden.

Im Stand der Technik wird versucht, die Bildung von Ablagerungen in den Leitungsrohren durch die Temperierung der Rohre zu unterdrücken. Allerdings sind der Beheizung der Leitungen Grenzen gesetzt, die damit zusammenhängen, dass bei erhöhten Temperaturen auch unerwünschte Folgereaktionen auftreten können, und dass beim Einleiten des Produktfluidstroms in den Abscheidern eine Abkühlung erforderlich ist, um eine möglichst wirksame Auftrennung von leicht flüchtigen und weniger leicht flüchtigen Bestandteilen vornehmen zu können.

Weiterhin ist es bevorzugt, dass das erfindungsgemäße Verfahren bei Laborkatalyseapparaturen mit parallel angeordneten Reaktoren sowohl in Verbindung mit einer Hauptstromdruckregelung als auch in Verbindung mit einer Nebenstromdruckregelung eingesetzt wird. Eine beispielhafte Ausgestaltungsform einer Hauptstromdruckregelung wird in der WO 2006/107187 A1 offenbart. Eine beispielhafte Darstellung einer Nebenstromdruckregelung wird in den PCT-Anmeldungen WO 2005/063372 A2, WO 2008/055585 A1 und WO 2008/012073 A1 offenbart und ist diesbezüglich vollumfänglich durch Bezugnahme Bestandteil der vorliegenden Erfindung.

Bei der Hauptstromdruckregelung befinden sich vorzugsweise die aktiven Regelelemente direkt im Produktfluidstrom. Die Nachregelung steht hierbei vorzugsweise in Verbindung mit der Bewegung einer Ventilnadel innerhalb eines Ventils. Bei der Bildung von Ablagerungen kann die Störung in einem gewissen Umfang durch einen Nachregelungsmechanismus kompensiert werden. Darüber hinaus kann auch die Bewegung der Ventilnadeln dazu führen, dass die Bildung von Ablagerungen beeinträchtigt wird oder die Ablagerungen wieder abplatzen.

Vorzugsweise wird das erfindungsgemäße Verfahren in Verbindung mit einer Nebenstromdruckregelung verwendet. Bei einer Nebenstromdruckregelung sind die für die Regelung verantwortlichen Bauelemente nicht direkt dem Produktfluidstrom ausgesetzt. Einen wesentlichen Einfluss auf die Bildung von schwefel- und stickstoffhaltigen Ablagerungen nehmen dabei die Querschnitte der Leitungen und Bauelemente sowie auch deren Temperaturen. Im Allgemeinen sind Leitungen und Bauelemente mit sehr geringen Leitungsquerschnitten besonders anfällig gegenüber Ablagerungen, da schon eine kleine Menge an Ablagerungen eine Blockade der Leitungen bewirken können. Die Leitungsquerschnitte der Laborkatalyseapparaturen mit Nebenstromregelung liegen in einem Bereich von 0,1 mm bis 10 mm, wobei jedoch auch Leitungselemente enthalten sind, deren Querschnitte in einem Bereich von 5 µm bis 500 µm liegen.

Mittels des erfindungsgemäßen Verfahrens kann die Bildung von störenden Ablagerungen weitgehend unterbunden werden. Ein Vorteil besteht darin, dass die Laufzeiten von Laborapparaturen selbst unter anspruchsvollen Versuchsbedingungen hinsichtlich dem Druck und der Temperatur weiter verlängert werden können, ohne dass die Datenqualität dabei eingeschränkt wird. Es handelt sich hierbei um Drücke im Bereich von 5 bar bis 300 bar, vorzugsweise 10 bar bis 200 bar. Beispielsweise können Experimente, die bisher nur über den Zeitraum von 10 Stunden bis 30 Tagen durchgeführt werden konnten, nunmehr problemlos über mehrere Wochen bis zu sechs Monate oder auch bis zu zwölf Monaten durchgeführt werden. Die Messdaten weisen eine geringe Streuung und gute Reproduzierbarkeit auf, die dem Verfahren aus dem Stand der Technik überlegen sind.

Das Anwendungsgebiet der Erfindung ist im Bereich von Laborkatalyse-apparaturen.

Die katalytische Umsetzung der flüssigen Zuläufe, die in Zusammenhang mit dem erfindungsgemäßen Verfahren stehen, wird vorzugsweise bei Temperaturen im Bereich von 50°C bis 700°C und bei Drücken in einem Bereich von 10 bar bis 250 bar durchgeführt. Weiter vorzugsweise liegen die Temperaturen der katalytischen Umsetzungen in einem Bereich von 100°C bis 500°C und die Drücke in einem Bereich von 20 bar bis 200 bar.

Da das erfindungsgemäße Verfahren aufgrund der Zufuhr von vergleichsweise großen Mengen an Inertgas zum Produktfluidstrom mit einer Verdünnung des Produktfluidstroms verbunden ist, ist eine Anpassung der analytischen Charakterisierungsmethoden an diese Verdünnung bevorzugt. Die Empfindlichkeit der Messgeräte ist dabei ausreichend, um auch die geringen Konzentrationen an Verbindungen in den stark verdünnten Produktfluidströmen zu charakterisieren.

In einer bevorzugten Ausführungsform des erfindungsgemäßen Verfahrens werden über analytische Messgeräte fast ausschließlich oder lediglich die kohlenwasserstoffhaltigen Komponenten erfasst. In einer anderen bevorzugten Ausführungsform des erfindungsgemäßen Verfahrens werden zusätzlich zu den kohlenwasserstoffhaltigen Verbindungen auch die Menge an Ammoniak und/oder Schwefelwasserstoff analysiert. Die vorliegende Erfindung ist nicht auf die Verwendung eines speziellen Analysensystems beschränkt, sondern es wird jeweils das Analysensystem eingesetzt, das für das vorliegende Reaktionssystem besonders geeignet ist.

### Beispiele

In einem Ausführungsbeispiel wurden katalytische Hydrierungsreaktionen von schwerem Rückstandsöl ("Long Resid" der Marke Texas-Blend aus den USA) mittels einer Katalyseapparatur durchgeführt, die in der WO 2005/063372 A2 offenbart wird. Bei der Katalyseapparatur waren sechzehn Reaktionsräume parallel angeordnet. Das Rückstandsöl hatte einen Schwefelgehalt von 3,8 Gew.-% und einen Stickstoffgehalt von 1 Gew.-%, wobei Schwefel und Stickstoff in gebundener Form als Kohlenwasserstoffverbindungen vorlagen.

Die katalytische Umsetzung des Öls wurde bei einer Reaktionstemperatur von 420°C durchgeführt, wobei ein Reaktionsdruck von 125 bar verwendet wurde. Die Temperatur im reaktionsraumausgangsseitigen Bereich, insbesondere in den Verbindungsleitungen und den Abscheidern, lag bei 120°C. Die Durchführung der Hydrierungsreaktionen erfolgte unter Nutzung des erfindungsgemäßen Verfahrens, wobei dem Produktfluidstrom mittels einer Druckhaltegasleitung Stickstoff zugeführt wurde, und der Volumenstrom an zugeführtem Stickstoff in Abweichung von den Verfahren des Standes der Technik zehnmal so hoch war wie der Volumenstrom des Produktfluids. Überraschend wurde gefunden, dass bei der kontinuierlichen Prozessführung über einen Zeitraum von 60 Tagen keinerlei Ablagerungen in den Leitungen nachgewiesen wurden. Der Anteil an schwefel- und stickstoffhaltigen Verbindungen wurde gegenüber der Verfahrensführung aus dem Stand der Technik während der gesamten Untersuchungsdauer im Durchschnitt um 90 % reduziert. Bei der Untersuchung konnten aus der Vielzahl der untersuchten Katalysatoren zwei Feststoffkatalysatoren identifiziert werden, die einen höheren Umsetzungsgrad bezüglich der Schwefelwasserstoffbildung aufwiesen als die anderen Feststoffkatalysatoren.

Als Vergleichsbeispiel wurde die Reaktionsführung mit einer sehr viel geringeren Zufuhrrate an Druckhaltgas durchgeführt, also ohne den erfindungsgemäßen Überschuss an Inertgas. Es wurden bereits nach wenigen Tagen Ablagerungen in den Leitungen im reaktionsraumausgangsseitigen Bereich nachgewiesen, die zu einer starken Beeinträchtigung der Untersuchung führten.

## Patentansprüche

1. Verfahren zur Behandlung von Produktfluidströmen in einer Anordnung von zwei oder mehr Reaktoren, insbesondere in Reaktoren im Labormaßstab, also einer Laborkatalyseapparatur, mit zwei oder mehr parallel angeordneten Reaktionsräumen, wobei
(a) den einzelnen Reaktionsräumen je ein Eduktfluidstrom, umfassend einen flüssigen Zulauf ausgewählt aus der Klasse von schweren Rückstandsölen und Wasserstoff oder ein anderes Reaktionsgas und Trägergas, zugeführt wird, wobei das schwere Rückstandsöl sowohl schwefelhaltige Verbindungen als auch stickstoffhaltige Verbindungen aufweist wobei, der Schwefelgehalt im Bereich von 0,5 bis 7 Gew.-% und ein Stickstoffgehalt im Bereich von 0,1 bis 5 Gew.-% bezogen auf den gesamten flüssigen Zulauf ausmachen, wobei die Menge an zugeführtem Eduktfluid eine LHSV im Bereich von 0,05 bis 10 h⁻¹ aufweist und jeder einzelne Reaktionsraum ein Innenvolumen im Bereich von 1 bis 50 ml aufweist, und
(b) die aus den einzelnen Reaktionsräumen austretenden Produktfluidströme in je einen separaten Abscheider überführt werden, und
wobei das Verfahren **dadurch gekennzeichnet ist, dass** den einzelnen reaktionsraumausgangsseitigen Bereichen, und zwar zwischen den Abscheidern und ausgangsseitigen Drosseln, zumindest ein Inertgas zugeführt wird, und dass das Verhältnis des Volumenstroms vom Inertgas (V_{IG}) zum Volumenstrom des Produktfluidstroms (V_{PFS}) V_{IG}/V_{PFS} ≥ 10 ist.

2. Verfahren gemäß Anspruch 1, **dadurch gekennzeichnet, dass** der Anteil an gasförmigem Stickstoff im Inertgas gleich oder größer 95 % ist.

3. Verfahren nach einem der vorstehenden Ansprüche, **dadurch gekennzeichnet, dass** die Temperaturen in den Reaktionsräumen in einem Bereich von 100°C bis 700°C und die Drücke in den Reaktionsräumen in einem Bereich von 20 bar bis 250 bar liegen.

## Claims

1. A process for treating product fluid streams in an arrangement of two or more reactors, in particular in reactors on the laboratory scale, i.e. a laboratory catalysis apparatus, having two or more reaction spaces arranged in parallel, wherein
(a) a starting fluid stream comprising a liquid feed selected from the class of heavy residue oils and hydrogen or another reaction gas and carrier gas is fed into each of the individual reaction spaces, wherein the heavy residue oil comprises both sulfur-comprising compounds and nitrogen-comprising compounds, where the sulfur content is in the range from 0.5 to 7% by weight and a nitrogen content is in the range from 0.1 to 5% by weight, based on the total liquid feed, wherein the amount of starting fluid fed in has an LHSV in the range from 0.05 to 10 h⁻¹ and each individual reaction space has an internal volume in the range from 1 to 50 ml, and
(b) the product fluid streams exiting from the individual reaction spaces are each transferred into a separate separator, and
wherein the process has the characteristic feature that at least one inert gas is fed into the individual regions at the outlet side of the reaction space, specifically between the separators and outlet-side flow restrictors, and the ratio of the volume flow of inert gas (V_{IG}) to the volume flow of the product fluid stream (V_{PFS}), V_{IG}/V_{PFS}, is ≥ 10.

2. The process according to claim 1, wherein the proportion of gaseous nitrogen in the inert gas is greater than or equal to 95%.

3. The process according to either of the preceding claims, wherein the temperatures in the reaction spaces are in the range from 100°C to 700°C and the pressures in the reaction spaces are in the range from 20 bar to 250 bar.

## Revendications

1. Procédé pour le traitement de flux fluidiques de produit dans un agencement de deux réacteurs ou plus, en particulier dans des réacteurs à l'échelle du laboratoire, c'est-à-dire d'un appareil de catalyse de laboratoire, présentant deux chambres de réaction ou plus, agencées en parallèle,
(a) les différentes chambres de réaction étant alimentées chacune en un flux fluidique de départ, comprenant une alimentation liquide choisie dans la classe de huiles résiduaires lourdes, et en hydrogène ou un autre gaz de réaction et gaz support, l'huile résiduaire lourde présentant tant des composés soufrés que des composés azotés, la teneur en soufre représentant dans la plage de 0,5 à 7% en poids et une teneur en azote représentant dans la plage de 0,1 à 5% en poids par rapport à l'alimentation liquide totale, la quantité de fluide de départ alimenté présentant un LHSV (vitesse horaire du liquide) dans la plage de 0,05 à 10 h⁻¹ et chaque chambre de réaction individuelle présentant un volume interne dans la plage de 1 à 50 ml et
(b) les flux fluidiques de produit sortant des différentes chambres de réaction étant transférés dans à chaque fois un séparateur séparé et
le procédé étant **caractérisé en ce que** les zones côté sortie des différentes chambres de réaction sont alimentées, et ce entre les séparateurs et les étrangleurs côté sortie, en au moins un gaz inerte et **en ce que** le rapport du flux volumique du gaz inerte (V_{IG}) au flux volumique du flux fluidique de produit (V_{PFS}) V_{IG}/V_{PFS} est ≥ 10.

2. Procédé selon la revendication 1, **caractérisé en ce que** la proportion d'azote gazeux dans le gaz inerte est égal ou supérieur à 95%.

3. Procédé selon l'une des revendications précédentes, **caractérisé en ce que** les températures dans les chambres de réaction se situent dans une plage de 100°C à 700°C et les pressions dans les chambres de réaction se situent dans une plage de 20 bars à 250 bars.
